# EUROPEAN PATENT APPLICATION

(11) **EP 2 508 249 A1**
(43) Date of publication of application: **10.10.2012**
(21) Application number: 10834479.7
(22) Date of filing: 16.11.2010
(51) Int. Cl.: B01D 65/06, B01D 61/02, C02F 1/44

(54) **METHOD FOR CLEANING FILTRATION MEMBRANE**

(30) Priority: 02.12.2009 JP 2009274558
(71) Applicant: Mitsubishi Heavy Industries, Ltd., Tokyo 108-8215 (JP)
(72) Inventor: KAKIGAMI, Hidemasa, Tokyo 108-8215 (JP); ITO, Yoshiaki, Tokyo 108-8215 (JP); TAKEUCHI, Kazuhisa, Tokyo 108-8215 (JP); MATSUI, Katsunori, Tokyo 108-8215 (JP); IWAHASHI, Hideo, Tokyo 108-8215 (JP)
(74) Representative: Intès, Didier Gérard André
(86) International application number: PCT/JP2010/070392
(87) International publication number: WO 2011/068027

(57) **Abstract**

A method of cleaning a filtration membrane includes an alkaline treatment process for supplying an alkaline agent (24) to seawater (11) for a predetermined period of time and filtering the seawater (11), to which the alkaline agent (24) is supplied, through a reverse osmosis membrane (15) during a filtration treatment operation, and a neutralization treatment process for supplying an acid agent (26) to the seawater (11) for a predetermined period of time and filtering the seawater (11), to which the acid agent (26) is supplied, through the reverse osmosis membrane (15) after the alkaline treatment process.

## Description

### TECHNICAL FIELD

The present invention relates two a method, of cleaning a filtration membrane, more particularly, to a method of cleaning a reverse osmosis membrane used in a seawater desalination apparatus.

### BACKGROUND ART

Conventionally, a desalination apparatus as an apparatus for obtaining fresh water from seawater as raw water has been known that applies pressure to the seawater and filters the seawater through a filtration membrane called a reverse osmosis membrane (RO membrane) to condense and remove the salt content in the seawater to thereby produce fresh water (permeated water). In the desalination apparatus, when organic matters such as bacteria contained in the seawater adhere to the reverse osmosis membrane, the reverse osmosis membrane may be clogged, resulting in reduced permeability and increased transmembrane pressure difference. Therefore, it is necessary to periodically clean the reverse osmosis membrane to remove adhere matters from the surface.

An example of the method of cleaning the reverse osmosis membrane is disclosed in Patent Literature 1. In the method disclosed in Patent Literature 1, raw water, the pH of which is adjusted to 9.5 or greater in the alkaline range, is filtered through the reverse osmosis membrane to decompose and remove organic matters adhered to the reverse osmosis membrane.

Patent Literature 1: Japanese Patent Application Laid-open No. 2008-132421

### DISCLOSURE OF INVENTION

### TO BE SOLVED BY THE INVENTION

The raw water generally contains hard components such as calcium, so that when the pH of the raw water is increased as in the method disclosed in Patent Literature 1, scale due to the hard components is formed and adheres to the reverse osmosis membrane, leading to clogging of the reverse osmosis membrane. Therefore, in the method disclosed in Patent Literature 1, a chelating scale inhibitor such as ethylenediaminetetraacetic acid (EDTA), which can easily be dissociated to be bonded to metal ion to form a complex in the alkaline range, is added to the raw water to prevent the reverse osmosis membrane from being clogged by the scale. However, in this method, the scale inhibitor is mixed into discharge water to be discharged by the cleaning treatment, so that the discharge water cannot be released as it is to river or ocean. Therefore, there is a problem in that time and effort are necessary for treatment of the discharge water and treatment cost increases. Furthermore, because it is necessary to stop a filtration treatment operation of a filtration device during the cleaning of the reverse osmosis membrane, there is also a problem in that the production efficiency is reduced.

Therefore, there is a growing demand for a method of cleaning a filtration membrane capable of efficiently removing both the organic matters and the scale adhered to the filtration membrane such as the reverse osmosis membrane, and reducing treatment cost for the discharge water due to the cleaning.

The present invention is made in view of the above, and it is an object of the present invention to provide a method of cleaning a filtration membrane capable of efficiently removing both organic matters and scale, and reducing treatment cost for the discharge water due to the cleaning.

### MEANS FOR SOLVING PROBLEM

According to an aspect of the present invention, a method of cleaning a filtration membrane for filtering raw water through the filtration membrane to separate the raw water into permeated water and condensed water, include: an alkaline treatment step of supplying an alkaline agent to the raw water for a predetermined period of time and filtering the raw water, to which the alkaline agent is supplied, through the filtration membrane during a filtration treatment operation; and a neutralization treatment step of supplying an acid agent to the raw water for a predetermined period of time and filtering the raw water, to which the acid agent is supplied, through the filtration membrane after the alkaline treatment step.

Advantageously, in the method, when, at the neutralization treatment step, an amount of permeated water of the filtration membrane becomes equal to or greater than a predetermined value, supply of the acid agent is stopped.

Advantageously, in the method, when, at the alkaline treatment step, an amount of permeated water of the filtration membrane becomes equal to or smaller than a predetermined value, supply of the alkaline agent is stopped.

Advantageously, in the method, when, during the filtration treatment operation, an amount of permeated water of the filtration membrane becomes equal to or smaller than a predetermined value, the alkaline treatment step is started.

Advantageously, in the method, pH of the raw water used at the alkaline treatment step is set to be equal to or greater than 9.0, and pH of the raw water used at the neutralization treatment step is set to be equal to or smaller than 7.2.

Advantageously, in the method, the pH of the raw water used at the neutralization treatment step is set to be equal to or smaller than 5.0.

Advantageously, in the method, the raw water is seawater, and the filtration membrane is a reverse osmosis membrane.

### EFFECT OF INVENTION

According to the method of cleaning a filtration membrane of the present invention, raw water to which an alkaline agent is supplied is filtered through the filtration membrane to thereby remove organic matters such as bacteria adhered to the filtration membrane, and raw water to which an acid agent is supplied is filtered through the filtration membrane to thereby remove scale. Therefore, it is not necessary to add a scale inhibitor as in the conventional technology. Furthermore, according to the method of cleaning the filtration membrane of the present invention, the filtration membrane is cleaned while filtration treatment of the raw water is performed. Therefore, it is not necessary to stop the operation of a filtration device to clean the filtration membrane. Moreover, because the scale inhibitor is not added unlike the conventional technology, permeated water obtained by the cleaning can be used in the same manner as the permeated water obtained by a normal fresh-water production operation. As a result, treatment cost for the discharge water (condensed water) in the cleaning can be maintained to the same as treatment cost for condensed water generated by the normal fresh-water production operation.

### BRIEF DESCRIPTION OF DRAWINGS

FIG. 1 is a schematic diagram of a desalination apparatus to which a method of cleaning a filtration membrane according to an embodiment is applied.
FIG. 2 is a flowchart of a first example of a processing procedure for the method of cleaning the filtration membrane according to the embodiment.
FIG. 3 is a flowchart of a second example of the processing procedure for the method of cleaning the filtration membrane according to the embodiment.
FIG. 4 is a flowchart of a third example of the processing procedure for the method of cleaning the filtration membrane according to the embodiment.
FIG. 5 is a flowchart of a fourth example of the processing procedure for the method of cleaning the filtration membrane according to the embodiment.
FIG. 6 is a graph of a relationship between the pH of raw water and the amount of permeated water when cleaning is performed by supplying an alkaline agent and an acid agent to the raw water (seawater).

### BEST MODE(S) FOR CARRYING OUT THE INVENTION

Exemplary embodiments of the present invention will be described in detail below with reference to the accompanying drawings. The present invention is not limited by the embodiments. Constituent elements in the embodiments include elements that can readily be conceived by a person skilled in the art, or elements being substantially similar thereto. In the following, an example is described in which a reverse osmosis membrane used in a desalination apparatus is cleaned.

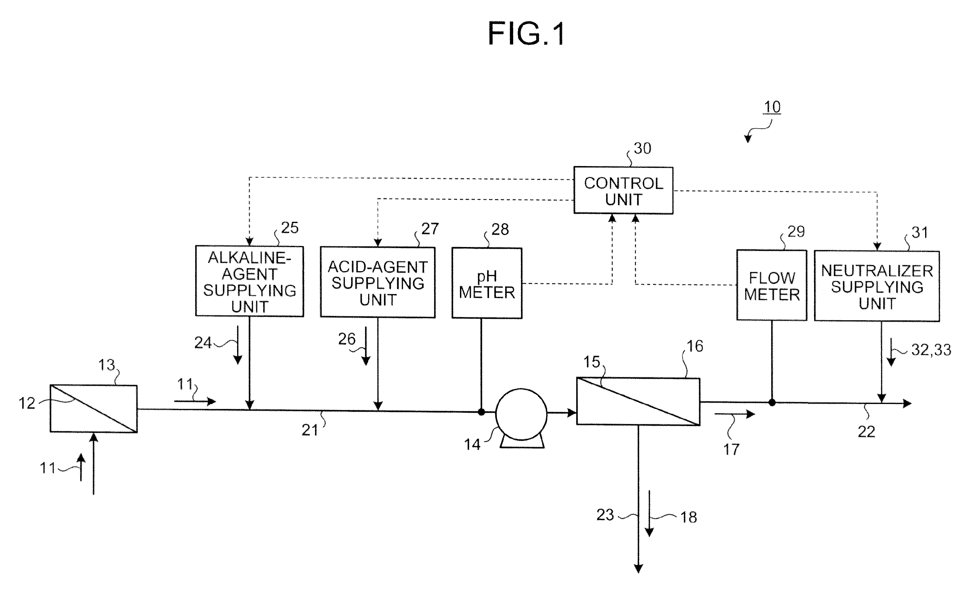

FIG. 1 is a schematic diagram of the desalination apparatus to which a method of cleaning a filtration membrane according to the embodiment is applied. A desalination apparatus 10 illustrated in FIG. 1 is an apparatus that obtains fresh water by applying pressure to seawater and filtering the seawater through a reverse osmosis membrane (RO membrane) to condense and remove the salt content in the seawater. The desalination apparatus 10 includes a pretreatment devise 13 having a pretreatment membrane 12 that filters suspended matters in raw water (seawater) 11, a pump 14 that pressurizes and sends the seawater 11 supplied from the pretreatment device 13, and a reverse osmosis membrane device 16 having a reverse osmosis membrane (RO membrane) 15 that removes a salt content from the seawater 11 pressurized by the pump 14 to obtain permeated water (fresh water) 17.

The desalination apparatus 10 is configured to filter the suspended matters in the seawater 11 by using the pretreatment device 13 and then apply operating pressure that is greater than the osmotic pressure on the seawater side of the reverse osmosis membrane 15 by using the pump 14 to thereby separate the seawater 11 into the permeated water (fresh water) 17 and condensed water 18 to obtain the permeated water 17. Here, the reference numeral 21 denotes a seawater line for supplying the seawater subjected to the treatment by the pretreatment device 13 to the reverse osmosis membrane device 16, the reference numeral 22 denotes a permeated water line for supplying the permeated water 17 to a water-use facility or the like provided outside, and the reference numeral 23 denotes a condensed water line for discharging the condensed water 18 condensed by the reverse osmosis membrane device 16.

The desalination apparatus 10 includes, as membrane cleaning means for decomposing and removing adhered matters on the reverse osmosis membrane 15, an alkaline-agent supplying unit 25 that supplies an alkaline agent 24 to the seawater 11 in the seawater line 21, an acid-agent supplying unit 27 that supplies an acid agent 26 to the seawater 11 in the seawater line 21, a pH meter 28 that measures the pH of the seawater 11 near an inlet of the reverse osmosis membrane device 16, a flow meter 29 that measures a flow rate of the permeated water 17 near an outlet of the reverse osmosis membrane device 16 having the reverse osmosis membrane 15, and a control unit 30 that controls the supply of the alkaline agent 24 and the acid agent 26.

In the method of cleaning the reverse osmosis membrane 15 according to the embodiment, during the operation of the desalination apparatus 10, the alkaline agent 24 is supplied to the seawater 11 for a predetermined period of time to adjust the pH of the seawater 11 near the inlet of the reverse osmosis membrane device 16 to be in a predetermined alkaline range, and the seawater 11 is filtered through the reverse osmosis membrane 15 to decompose and remove organic matters such as bacteria adhered to the reverse osmosis membrane 15 (an alkaline treatment process). Subsequently, the acid agent 26 is added to the seawater 11 for a predetermined period of time to adjust the pH of the seawater 11 to be in the neutral or acid range, and the seawater 11 is filtered through the reverse osmosis membrane 15 to dissolve and remove scale formed by the alkaline treatment process from the reverse osmosis membrane 15 (neutralization treatment process).

By performing the alkaline treatment process and the neutralization treatment process described above, it is possible to efficiently remove the organic matters and the scale adhered to the reverse osmosis membrane 15 during the desalination treatment by the desalination apparatus 10. Therefore, it is possible to always maintain the permeability of the reverse osmosis membrane 15 in a desired state. Furthermore, in this cleaning method, because the reverse osmosis membrane 15 is cleaned while the desalination treatment is carried out on the seawater 11, it is not necessary to temporarily stop the operation of the desalination apparatus 10 for cleaning the reverse osmosis membrane 15 or it is not necessary to detach the reverse osmosis membrane device 16 from the desalination apparatus 10 for the cleaning. Therefore, the production efficiency of the desalination apparatus 10 is not reduced. Moreover, because the scale inhibitor is not added unlike the conventional technology, the permeated water 17 produced by the cleaning can be used in the same manner as the permeated water 17 produced by the normal fresh-water fabrication operation (hereinafter, referred to as "normal operation"). Furthermore, special treatment is not needed for the condensed water 18 generated by the cleaning treatment, so that the treatment cost can be approximately the same as that for the condensed water 18 generated by the normal operation. The alkaline treatment process and the neutralization treatment process will be described in detail below.

Examples of the reverse osmosis membrane 15 to be cleaned include: a "hollow fiber membrane" type reverse osmosis membrane that is molded into a thin hollow fiber-like shape having a diameter of, for example, 3 to 7 mm and that filters from outside to inside; and a "spiral membrane" type reverse osmosis membrane in which a sheet of filtration membrane is overlaid with a strong mesh support to keep its strength with their being bonded to form an envelope, the envelope is then wound in a Swiss roll fashion, and pressure is applied from its cross-section direction. Regarding the material of the reverse osmosis membrane 15, any cellulose acetate materials or polyamide materials may be used.

The pH of the seawater 11 before the alkaline agent 24 is added, i.e., when the normal desalination treatment, operation, is performed, is about 7.2. In the alkaline treatment process, the control unit 30 adds the alkaline agent 24 from the alkaline-agent supplying unit 25 to the seawater 11 so that the pH of the seawater 11 to be supplied to the reverse osmosis membrane device 16 is in a range from 8.5 to 12.0, and more preferably, in a range from 9.0 to 12.0. In this case, an example of the control by the control unit 30 is that the alkaline agent 24 is supplied for a predetermined period of time based on a measurement value of the pH meter 28. More specifically, the alkaline agent 24 is supplied to the seawater 11 for, for example, 30 minutes so that the pH measured by the pH meter 28 can be maintained at 10.5.

Another example of the control by the control unit 30 is that the alkaline agent 24 is supplied at a constant supply rate for a predetermined period of time.
In this case, the pH of the seawater 11 is not measured by the pH meter 28 during the supply as in the above control example, but the supply rate that may give a predetermined value of the pH of the seawater 11 is calculated in advance, and the supply rate is determined based on the calculation. More specifically, the alkaline agent 24 is supplied at the supply rate of 10 [kg/s] for 30 minutes.

In general, alkaline solution has the property of decomposing organic matters such as bacteria. Therefore, by filtering the seawater 11, the pH of which is adjusted to be in the above range, through the reverse osmosis membrane 15, the organic matters such as bacteria adhered to the reverse osmosis membrane 15 are decomposed, so that the reproduction of the organic matters such as bacteria can be prevented. Consequently, it is possible to prevent the reverse osmosis membrane 15 from being clogged by adhesion of the organic matters. In this case, when the pH of the seawater 11 is smaller than 8.5, the bacteria are not decomposed, so that sufficient cleaning effect cannot be obtained. On the other hand, when the pH of the seawater 11 exceeds 12.0, the reverse osmosis membrane 15 may be deteriorated.

Examples of the alkaline agent 24 to be supplied from the alkaline-agent supplying unit 25 to the seawater 11 include sodium hydroxide, calcium hydroxide, and potassium hydroxide. Specifically, it is desirable to use sodium hydroxide because it is the cheapest. The time for performing the alkaline treatment on the seawater 11 is about a few minutes to a few hours depending on the type of the reverse osmosis membrane 15 or the dirtiness of the seawater 11. The pressure of the pump 14 at the time of the alkaline treatment process is the same as that of the normal operation.

When the alkaline treatment process described above is performed for a long period of time, the organic matters such as bacteria are decomposed and removed; however, scale (calcium carbonate) due to the hard components such as calcium contained in the seawater 11 adheres to the reverse osmosis membrane 15. If the scale is left as it is, the reverse osmosis membrane 15 is clogged and the permeability is reduced. Therefore, the neutralization treatment, process described above is performed after the alkaline agent 24 is supplied for a predetermined period of time.

In the neutralization treatment process, the control unit 30 adds the acid agent 26 from the acid-agent supplying unit 27 to the seawater 11 so that the pH of the seawater 11 to be supplied to the reverse osmosis membrane device 16 is in a range from 2.0 to 7.2, and more preferably, to be equal to or smaller than 5.0. In this case, an example of the control by the control unit 30 is that the acid agent 26 is supplied for a predetermined period of time based on a measurement value of the pH meter 28. More specifically, the acid agent 26 is supplied to the seawater 11 for, for example, 30 minutes so that a measurement value of the pH meter 28 is maintained to pH 5.0. Furthermore, another example of the control by the control unit 30 is that the acid agent 26 is supplied at a constant supply rate for a predetermined period of time.
In this case, the pH of the seawater 11 is not measured by the pH meter 28 during the supply, but the supply rate that may give a predetermined value of the pH of the seawater 11 is calculated in advance, and the supply rate is determined based on the calculation. More specifically, the acid agent 26 is supplied at the supply rate of 10 [kg/s] for 30 minutes.

The scale such as calcium carbonate formed in the seawater 11 can be dissolved to some extent in neutral solution with pH of about 7.2. Therefore, when the amount of scale adhered to the reverse osmosis membrane 15 is relatively small, it is possible to fully dissolve the scale adhered to the reverse osmosis membrane 15 by adding the acid agent 26 to the extent that the seawater 11 is neutralized (pH 7.2). Accordingly, the amount of permeated water of the reverse osmosis membrane 15 can be recovered to a desired value.

However, when the sterilizing effect on the reverse osmosis membrane 15 is also taken into account, it is desirable to set the pH of the seawater 11 to be equal to or smaller than 5.0. Furthermore, when the amount of scale adhered to the reverse osmosis membrane 15 is relatively large, it is possible to reliably dissolve and remove the scale by setting the pH of the seawater 11 to be equal to or smaller than 5.0, and at the same time, it is possible to effectively remove composite fouling of organic matters and inorganic matters. Consequently, the desired permeability of the reverse osmosis membrane 15 can be maintained. In this case, in the neutralization treatment process, when the pH of the seawater 11 exceeds 7.2, the scale cannot be dissolved and removed, so that the sufficient cleaning effect cannot be obtained. On the other hand, when the pH of the seawater 11 is smaller than 2.0, the reverse osmosis membrane 15 may be deteriorated.

Examples of the acid agent 26 supplied from the acid-agent supplying unit 27 to the seawater 11 include nitric acid, sulfuric acid, and hydrochloric acid. It is desirable to use nitric acid because it is the cheapest. The time for performing the neutralization treatment process is about a few minutes to a few hours depending on the type of the reverse osmosis membrane 15 or the amount of the adhered scale. The pressure of the pump 14 at the time of the neutralization treatment process is the same as that of the normal operation.

The cleaning treatment including the alkaline treatment process and the neutralization treatment process described above may be performed repeatedly (continuous cleaning) or intermittently (intermittent cleaning) during the normal operation of the desalination apparatus 10. The continuous cleaning means that the alkaline treatment process and the neutralization treatment process are repeated immediately after the alkaline treatment process and the neutralization treatment process are once completed, i.e., the cleaning process is simultaneously performed while the desalination apparatus 10 performs the normal operation. The intermittent cleaning means that the cleaning is performed at predetermined intervals during the normal operation of the desalination apparatus 10. For example, the cleaning is performed at regular intervals, e.g., once a day or once a weak, or the cleaning is performed only when the amount of permeated water is reduced to less than a predetermined value.

The flow meter 29 for measuring the flow rate of the permeated water 17 near the outlet of the reverse osmosis membrane device 16 is connected to the permeated water line 22, and the amount of permeated water [m³/h] of the reverse osmosis membrane 15 can be calculated based on the measurement result of the flow meter 29.

In the alkaline treatment process described above, the pH of the seawater 11 as the raw water is adjusted to be in the alkaline range, so that the pH of the permeated water 17 obtained during the alkaline treatment process is also made alkaline. Furthermore, in the neutralization treatment process described above, the pH of the seawater 11 as the raw water is adjusted to be in the neutral or acid range, so that when the pH of the seawater 11 is adjusted to be in the acid range, the pH of the permeated water 17 is also made acidic. Therefore, a neutralizer supplying unit 31 for supplying a neutralizer is connected to the permeated water line 22 so that the permeated water 17 can be neutralized as needed. Hydrochloric acid, sulfuric acid, or carbonic acid is as a neutralizer 32 for neutralizing the alkaline permeated water 17, and sodium hydroxide, calcium carbonate, or calcium hydroxide is as a neutralizer 33 for neutralizing the acid permeated water 17. It is not indispensable to neutralize the permeated water 17, and the neutralization is performed according to use of the permeated water 17.

### [Cleaning treatment process: First Example]

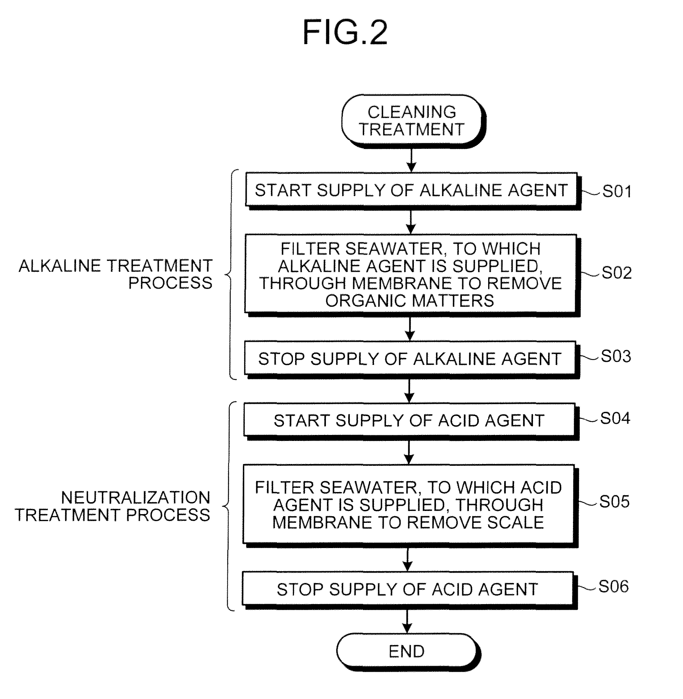

FIG. 2 is a flowchart of a first example of the cleaning treatment including the alkaline treatment process and the neutralization treatment process described above. In the first example, the cleaning is performed once a day at predetermined time, and it is assumed that the length of each cleaning time in the alkaline treatment process and the neutralization treatment process is determined in advance. The cleaning treatment procedure of the first example will be described below with reference to FIG. 2.

While the desalination apparatus 10 is performing the normal fresh-water production operation, the control unit 30 transmits, at the cleaning start time, a supply start instruction to the alkaline-agent supplying unit 25, and the alkaline-agent supplying unit 25 starts supplying the alkaline agent 24 (Step S01). Then, the seawater 11, the pH of which is adjusted to a predetermined value in the alkaline range, is filtered through the reverse osmosis membrane 15 for a predetermined period of time to thereby remove organic matters such as bacteria adhered to the membrane surface (Step S02). On the other hand, during the above operation, the scale formed in the seawater 11 gradually adheres to the reverse osmosis membrane 15. After a lapse of the predetermined period of time since the supply start time, the control unit 30 transmits a supply stop instruction to the alkaline-agent supplying unit 25 (Step S03). Subsequently, the control unit 30 immediately transmits a supply start instruction to the acid-agent supplying unit 27, and the acid-agent supplying unit 27 starts supplying the acid agent 26 (Step S04). Then, the seawater 11, the pH of which is adjusted to a predetermined value in the neutral or acid range, is filtered through the reverse osmosis membrane 15 for a predetermined period of time to thereby remove the scale adhered to the membrane, surface (Step S05). After a lapse of the predetermined period of time since the supply start time, the control unit 30 transmits a supply stop instruction to the acid-agent supplying unit 27 (Step S06) to finish the cleaning of the reverse osmosis membrane 15.

In the above first example, an example is explained in which the intermittent cleaning is performed once a day. However, when the continuous cleaning is performed, the process returns to Step S01 after Step S06, and the treatment from Steps S02 to S06 is continuously repeated.

### [Cleaning treatment procedure: Second Example]

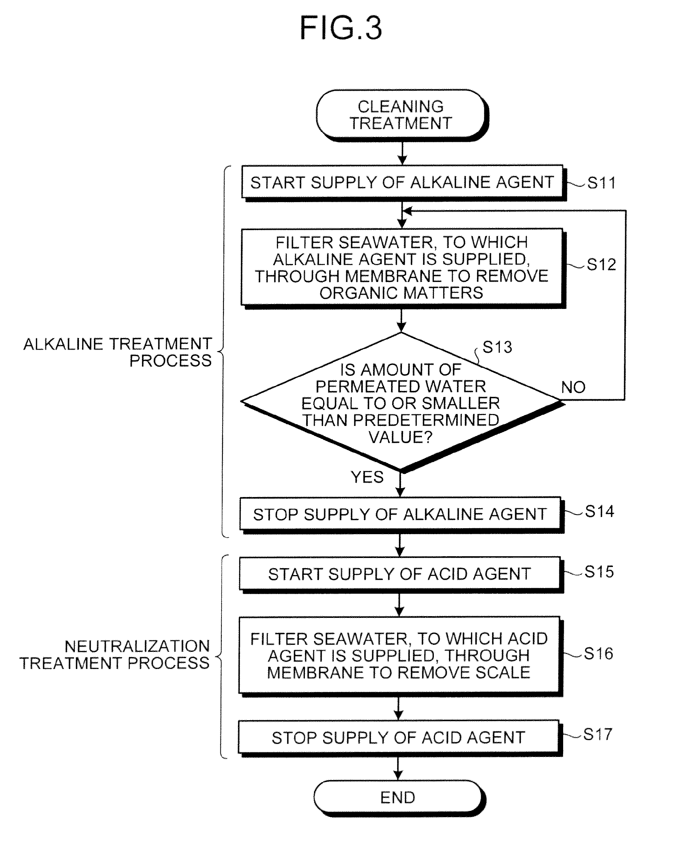

FIG. 3 is a flowchart of a second example of the cleaning treatment including the alkaline treatment process and the neutralization treatment process described above. In the second example, similarly to the first example described above, the cleaning is performed once a day at predetermined time. However, the second example is different from the first example, in that whither to stop the supply of the alkaline agent 24 in the alkaline treatment process is determined based on the amount of permeated water of the reverse osmosis membrane 15. The cleaning treatment procedure of the second example will be described below with reference to FIG. 3.

While the desalination apparatus 10 is performing the normal fresh-water production operation, the control unit 30 transmits, at the cleaning start time, a supply start instruction to the alkaline-agent supplying unit 25 to start supplying the alkaline agent 24, and simultaneously starts monitoring the amount of permeated water of the reverse osmosis membrane 15 by using the flow meter 29 (Step S11). Then, the seawater 11, the pH of which is adjusted to a predetermined value in the alkaline range, is filtered through the reverse osmosis membrane 15 to thereby remove organic matters such as bacteria adhered to the membrane surface (Step S12). During the above operation, although the scale formed in the seawater 11 gradually adheres to the reverse osmosis membrane 15, when the amount of permeated water of the reverse osmosis membrane 15 exceeds a predetermined value set in advance (NO at Step S13), the control unit 30 continuously supplies the alkaline agent 24. On the other hand, when the amount of scale adhered to the reverse osmosis membrane 15 increases and the amount of permeated water of the reverse osmosis membrane 15 becomes less than the predetermined value (YES at Step S13), the control unit 30 stops the supply of the alkaline agent 24 (Step S14), and immediately transmits a supply instruction to the acid-agent supplying unit 27 to start supplying the acid agent 26 (Step S15). The seawater 11, the pH of which is adjusted to a predetermined value in the neutral or acid range, is filtered through the reverse osmosis membrane 15 for a predetermined period of time to thereby remove the scale adhered to the membrane surface (Step S16). After a lapse of the predetermined period of time, the control unit 30 transmits a supply stop instruction to the acid-agent supplying unit 27 (Step S17) to finish the cleaning of the reverse osmosis membrane 15.

In the above second example, an example is explained in which the intermittent cleaning is performed once a day. However, when the continuous cleaning is performed, the process returns to Step S11 after Step S17, and the treatment from Steps S12 to S17 is continuously repeated.

### [Cleaning treatment procedure: Third Example]

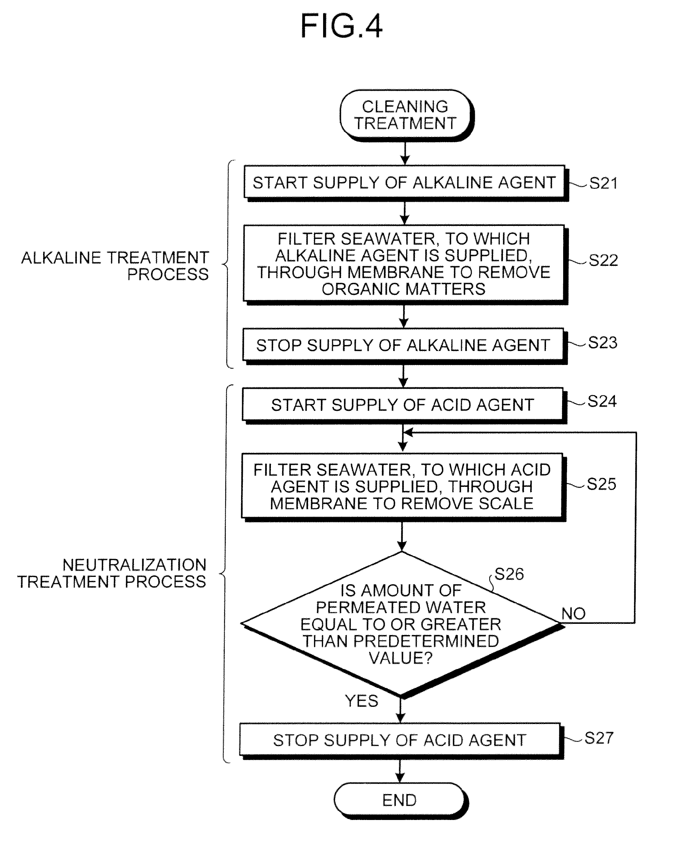

FIG. 4 is a flowchart of a third example of the cleaning treatment including the alkaline treatment process and the neutralization treatment process described above. In the third example, similarly to the first example, the cleaning is performed once a day at predetermined time. However, the third example is different from the first example in that whether to stop the supply of the acid agent 26 in the neutralization treatment process is determined based on the amount of permeated water of the reverse osmosis membrane 15. The cleaning treatment procedure of the third example will be described below with reference to FIG. 4.

While the desalination apparatus 10 is performing the normal fresh-water production operation, the control unit 30 transmits, at the cleaning start time, a supply start instruction to the alkaline-agent supplying unit 25, and the alkaline-agent supplying unit 25 starts supplying the alkaline agent 24 (Step S21). Then, the seawater 11, the pH of which is adjusted to a predetermined value in the alkaline range, is filtered through the reverse osmosis membrane 15 for a predetermined period of time to thereby remove organic matters such as bacteria adhered to the membrane surface (Step S22). During the above operation, the scale formed in the seawater 11 gradually adheres to the reverse osmosis membrane 15. After a lapse of the predetermined period of time since the supply start time, the control unit 30 stops the supply of the alkaline agent 24 (Step S23). Then, the control unit 30 immediately transmits a supply start instruction to the acid-agent supplying unit 27 and starts monitoring the amount of permeated water of the reverse osmosis membrane 15 by using the flow meter 29 (Step S24). Then, the seawater 11, the pH of which is adjusted to a predetermined value in the neutral or acid range, is filtered through the reverse osmosis membrane 15 for a predetermined period of time to thereby remove the scale adhered to the membrane surface (Step S25). Until the amount of permeated water of the reverse osmosis membrane 15 reaches a predetermined value set in advance (NO at Step S26), the control unit 30 continuously supplies the acid agent 26. On the other hand, when the amount of permeated water of the reverse osmosis membrane 15 becomes equal to or greater than the predetermined value (YES at Step S26), the control unit 30 determines that the reverse osmosis membrane 15 is fully cleaned, and transmits a supply stop instruction to the acid agent supplying unit 27 (Step S27) to finish the cleaning of the reverse osmosis membrane 15.

In the above third example, an example is explained in which the intermittent cleaning is performed once a day. However, when the continuous cleaning is performed, the process returns to Step S21 after Step S27, and the treatment from Steps S22 to S27 is continuously repeated.

### [Cleaning treatment, procedure: Fourth Example],

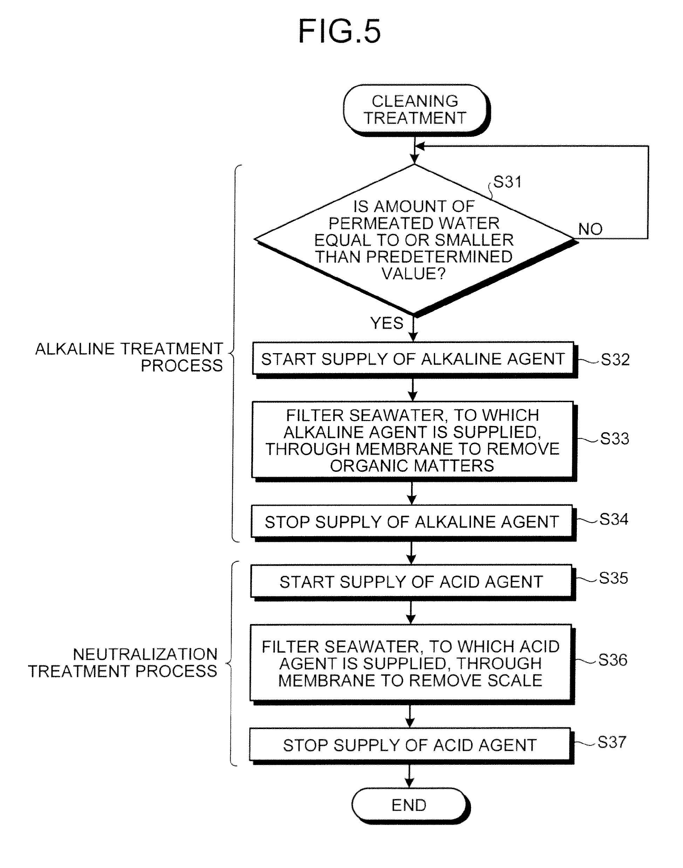

FIG. 5 is a flowchart of a fourth example of the cleaning treatment including the alkaline treatment, process and the neutralization treatment process described above. The fourth example is different from the first example in that the cleaning is not started at predetermined time unlike the first example, and whether to start the cleaning is determined based on the amount of permeated water of the reverse osmosis membrane 15. The cleaning treatment procedure of the fourth example, will be described below with reference to FIG. 5.

While the desalination apparatus 10 is performing the normal fresh-water production operation, the control unit 30 monitors the amount of permeated water of the reverse osmosis membrane 15 by using the flow meter 29. When the amount of permeated water of the reverse osmosis membrane 15 becomes equal to or smaller than a predetermined value (YES at Step S31), the control unit 30 transmits a supply start instruction to the alkaline-agent supplying unit 25, and the alkaline-agent supplying unit 25 starts supplying the alkaline agent 24 (Step S32). Then, the seawater 11, the pH of which is adjusted to a predetermined value in the alkaline range, is filtered through the reverse osmosis membrane 15 for a predetermined period of time to thereby remove organic matters such as bacteria adhered to the membrane surface (Step S33). During the above operation, the scale formed in the seawater 11 gradually adheres to the reverse osmosis membrane 15. After a lapse of the predetermined period of time since the supply start time, the control unit 30 transmits a supply stop instruction to the alkaline-agent supplying unit 25 (Step S34). Subsequently, the control unit 30 immediately transmits a supply start instruction to the acid agent supplying unit 27, and the acid agent supplying unit 27 starts supplying the acid agent 26 (Step S35). Then, the seawater 11, the pH of which is adjusted to a predetermined value in the neutral or acid range, is filtered through the reverse osmosis membrane 15 for a predetermined period of time to thereby remove the scale adhered to the membrane surface (Step S36). After a lapse of the predetermined period of time, the control unit 30 transmits a supply stop instruction to the acid agent supplying unit 27 (Step S37) to finish the cleaning of the reverse osmosis membrane 15.

The cleaning treatment procedures described in the first to the fourth examples are described by way of examples only, and the present invention is not limited thereto. For example, it is possible to perform all of the determination at Step S13 of the second example illustrated in FIG. 3, the determination at Step S26 of the third example illustrated in FIG. 4, and the determination at Step S31 of the fourth example, illustrated in FIG. 5. That is, it is possible to determine start and stop of the supply of the alkaline agent 24 and stop of the supply of the acid agent 26 based on the amount of permeated water of the reverse osmosis membrane 15. Furthermore, although the supply of the acid agent 26 is immediately started after the supply of the alkaline agent 24 is stopped in the first to the fourth examples described above, it is possible to supply the acid agent 26 after a lapse of a predetermined time since the supply of the alkaline agent 24 is stopped.

### [Test Example]

To confirm the advantages of the cleaning method described above, the following measurement was performed.

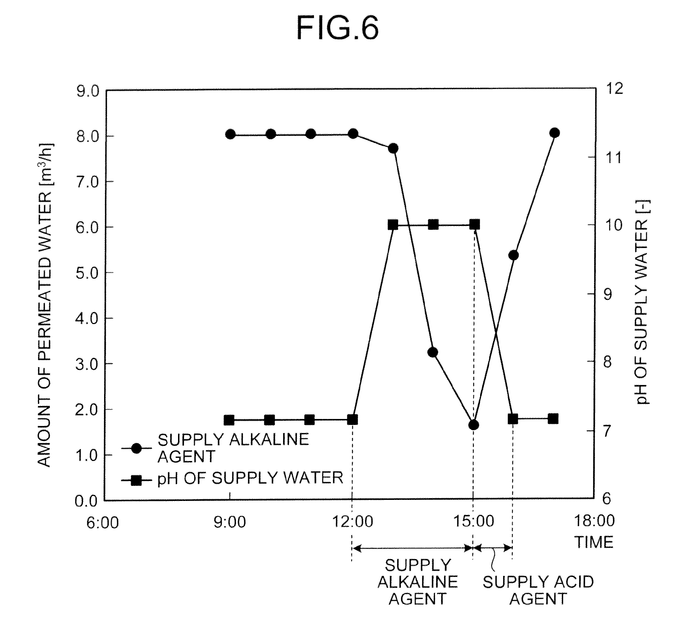

The cleaning treatment is performed on a reverse osmosis membrane while the desalination apparatus is performing desalination treatment. The amount of permeated water of the reverse osmosis membrane and the change in the pH of supply water are measured before, during, and after the cleaning treatment. The seawater with pH 7.2 is used as the supply water. The measurement result is illustrated in FIG. 6.

As illustrated in FIG. 6, measurement is started at 9 o'clock, the supply of an alkaline agent is started at 12 o'clock, and the supply water, the pH of which is adjusted to 10.0, is filtered through the reverse osmosis membrane to decompose and remove organic matters adhered to the reverse osmosis membrane. On the other hand, scale is gradually formed in the supply water, and the amount of permeated water of the reverse osmosis membrane starts decreasing in about 1 hour since the start of supply. After 3 hours since the start of supply, the amount of permeated water is reduced to 1/4 of the amount before the supply of the alkaline agent. Therefore, the supply of the alkaline agent is stopped and the supply of an acid agent is started to neutralize the alkaline supply water. The pH of the supply water is adjusted to 7.2, which is identical to the value before the cleaning is started. Consequently, the scale adhered to the reverse osmosis membrane is gradually dissolved, and the amount of permeated water is approximately recovered to the value before the cleaning treatment is performed.

According to the result illustrated in FIG. 6, it is confirmed that, when the supply water is neutralized by supplying the acid agent, if the pH of the supply water is returned to be in the neutral range that is the same as before the cleaning treatment, the scale adhered to the reverse osmosis membrane can fully be dissolved and removed, and the amount of permeated water can be recovered to the amount before the cleaning.

As described above, the method of cleaning a filtration membrane (reverse osmosis membrane) according to the embodiment includes the alkaline treatment process in which the alkaline agent 24 is supplied to the seawater 11 as raw water, and the seawater 11, the pH of which is adjusted to be in a predetermined range in the alkaline range, is filtered through the reverse osmosis membrane 15 for a predetermined period of time; and the neutralization treatment process in which the acid agent 26 is supplied to the seawater 11, and the seawater 11, the pH of which is adjusted to be in a predetermined range in the neutral or acid range, is filtered through the reverse osmosis membrane 15 for a predetermined period of time. By filtering the seawater 11 in the alkaline range through the reverse osmosis membrane 15, the organic matters such as bacteria adhered to the reverse osmosis membrane 15 can be removed. Furthermore, by filtering the seawater 11 in the neutral or acid range through the reverse osmosis membrane 15, the scale can be removed. Therefore, it is not necessary to add a scale inhibitor as in the conventional technology. Furthermore, in the method of cleaning the filtration membrane according to the present invention, the reverse osmosis membrane 15 is cleaned while the fresh-water production operation is performed on the seawater 11. Therefore, it is not necessary to stop the operation of the desalination apparatus 10 to clean the membrane. Moreover, because the scale inhibitor is not added unlike the conventional technology, the permeated water 17 obtained during the cleaning can be used in the same manner as the permeated water 17 obtained by the normal fresh-water production operation. Therefore, the treatment cost for the condensed wlater 18 can be maintained the same as the treatment cost for the condensed water 18 generated by the normal fresh-water production operation.

Furthermore, according to the method of cleaning the filtration mercbrane of the present invention, in the neutralization treatment process, when the amount of permeated water of the reverse osmosis membrane 15 becomes equal to or greater than a predetermined value, the supply of the acid agent 26 is stopped, so that the scale adhered to the reverse osmosis membrane 15 can reliably be removed.

Moreover, According to the method of cleaning the filtration membrane of the present invention, in the alkaline treatment process, when the amount of permeated water of the reverse osmosis membrane 15 becomes equal to or smaller than a predetermined value, the supply of the alkaline agent 24 is stopped. Therefore, it is possible to perform the subsequent neutralization treatment, process at the stage where the amount of scale adhered to the reverse osmosis membrane 15 is relatively small.

Furthermore, according to the method of cleaning the filtration membrane of the present invention, when the amount of permeated water of the reverse osmosis membrane 15 becomes equal to or smaller than a predetermined value during the fresh-water production operation of the desalination apparatus 10, the alkaline treatment process is started. Therefore, the cleaning treatment can efficiently be performed.

Moreover, according to the method of cleaning the filtration membrane of the present invention, the pH of the seawater 11 used in the alkaline treatment process is set to be equal to or greater than 9.0, so that organic matters adhered to the reverse osmosis membrane 15 can fully be decomposed and removed. Furthermore, the pH of the seawater 11 used in the neutralization treatment process is set to be equal to or smaller than 7.2, so that scale adhered to the reverse osmosis membrane 15 can fully be removed.

Furthermore, according to the method of cleaning the fiitration membrane of the present invention, the pH of the raw water used in the neutralization treatment process is set to be equal to or smaller than 5.0, the scale can reliably be removed and composite fouling of organic matters and inorganic matters can also be removed efficiently.

Moreover, according to the method of cleaning the filtration membrane of the present invention, the cleaning treatment described above is intermittently performed. Therefore, it is possible to suppress deterioration of the reverse osmosis membrane, 15 due to the alkaline agent 24 or the acid agent 26.

Furthermore, according to the method of cleaning the filtration membrane of the present invention, a reverse osmosis membrane used in a seawater desalination apparatus or the like is cleaned according to the above cleaning procedure. Therefore, it is possible to efficiently clean the reverse osmosis membrane during the operation of the desalination apparatus.

The above embodiment is explained with an example in which a reverse osmosis membrane used in a seawater desalination apparatus is cleaned. However, the raw water may be other than the seawater, and the present invention may be applied to a case where a reverse osmosis membrane used in an apparatus other than the desalination apparatus is cleaned. Furthermore, the filtration membrane to be cleaned according to the present invention is not limited to the reverse membrane, and may be other filtration membranes such as a UF membrane (ultrafilter membrane) and a MF membrane (microfilter membrane).

### INDUSTRIAL APPLICABILITY

As described above, the method of cleaning a filtration membrane according to the present invention is advantageous for cleaning a reverse osmosis membrane used in a seawater desalination apparatus.

### EXPLANATIONS OF LETTERS OR NUMERALS

- 10: desalination apparatus
- 11: seawater (raw water)
- 12: pretreatment membrane
- 13: pretreatment device
- 14: pump
- 15: reverse osmosis membrane (filtration membrane)
- 16: reverse osmosis membrane device
- 17: permeated water
- 18: condensed water
- 21: seawater line
- 22: permeated water line
- 23: condensed water line
- 24: alkaline agent
- 25: alkaline-agent supplying unit
- 26: acid agent
- 27: acid-agent supplying unit
- 28: pH meter
- 29: flow meter
- 30: control unit
- 31: neutralizer supplying unit
- 32, 33: neutralizer

## Claims

1. A method of cleaning a filtration membrane for filtering raw water through the filtration membrane to separate the raw water into permeated water and condensed water, the method comprising:
an alkaline treatment step of supplying an alkaline agent to the raw water for a predetermined period of time and filtering the raw water, to which the alkaline agent is supplied, through the filtration membrane during a filtration treatment operation; and
a neutralization treatment step of supplying an acid agent to the raw water for a predetermined period of time and filtering the raw water, to which the acid agent is supplied, through the filtration membrane after the alkaline treatment step.

2. The method according to claim 1, wherein
when, at the neutralization treatment step, an amount of permeated water of the filtration membrane becomes equal to or greater than a predetermined value, supply of the acid agent is stopped.

3. The method according to claim 1 or 2, wherein
when, at the alkaline treatment step, an amount of permeated water of the filtration membrane becomes equal to or smaller than a predetermined value, supply of the alkaline agent is stopped.

4. The method According to any one of claims 1 to 3, wherein
when, during the filtration treatment, operation, an amount of permeated water of the filtration membrane becomes equal to or smaller than a predetermined value, the alkaline treatment step is started.

5. The method according to any one of claims 1 to 4, wherein
pH of the raw water used at the alkaline treatment step is set to be equal to or greater than 9.0, and
pH of the raw water used at the neutralization treatment step is set to be equal to or smaller than 7.2.

6. The method according to claim 5, wherein
the pH of the raw water used at the neutralization treatment step is set to be equal to or smaller than 5.0.

7. the method according to any of claims 1 to 6, wherein
the raw water is seawater, and
the filtration membrane is a reverse osmosis membrane.
